# EUROPEAN PATENT SPECIFICATION

(11) **EP 3 126 168 B1**
(45) Date of publication and mention of the grant of the patent: **01.05.2019**
(21) Application number: 14887723.6
(22) Date of filing: 31.03.2014
(51) Int. Cl.: B60H 1/00, F24F 11/00

(54) **METHOD AND DEVICE FOR OPERATING AN AIR CONDITIONING SYSTEM OF AN AUTOMOTIVE VEHICLE**
VERFAHREN UND VORRICHTUNG ZUM BETRIEB EINES KLIMATISIERUNGSSYSTEMS EINES KRAFTFAHRZEUGS
PROCÉDÉ ET DISPOSITIF DE FONCTIONNEMENT D'UN SYSTÈME DE CLIMATISATION D'UN VÉHICULE AUTOMOBILE

(43) Date of publication of application: 08.02.2017
(73) Proprietor: PSA Automobiles SA, 78300 Poissy (FR)
(72) Inventor: MOLIN, Yoann, 73200 Mercury (FR); NEILDEZ, Aude, F-78330 (FR)
(86) International application number: PCT/CN2014/074413
(87) International publication number: WO 2015/149228

(56) References cited:
- CN-A- 101 256 019
- CN-A- 102 066 141
- CN-U- 203 110 879
- JP-A- 2009 051 364
- KR-A- 20110 087 410
- KR-B1- 101 280 422
- US-A- 5 775 406
- US-A1- 2007 243 808

## Description

The invention relates to the operation of a Heating, Ventilation and Air-Conditioning, HVAC, system of an automotive vehicle. In particular, the invention concerns the operation of an HVAC system having electronic controlling means. The electronic controlling means are capable of controlling and managing the functioning of the HVAC system depending on external parameters, such as parameters indicating the air quality on the outside of the vehicle.

It is known to equip automotive vehicles with systems that are capable of adjusting, among others, the air temperature, the air flow and the air humidity inside the vehicle. Such systems are referred to as Heating, Ventilation and Air-Conditioning, HVAC, systems. An HVAC system, if properly operated, is capable of increasing the comfort of the vehicle's passengers and of its driver. By increasing the comfort of the driver, and for example making sure that the water contained in the air inside the vehicle does not condense on the vehicle's window screens, HVAC systems contribute to the safety of the vehicle in traffic conditions. An HVAC system typically comprises a plurality of devices such as heating and ventilation units, pumps, outside air inlets and outlets, air filtering units and a piping system capable of transporting air volumes.

It is further known to equip an HVAC system with electronic controlling means, which manage the operation of the HVAC system in order to control for example the mix of fresh air originating from the outside of the vehicle and the recycling of air inside the vehicle. The controlling means typically rely on parameters which indicate the quality of the air at the outside of the vehicle. Detection means such as air pollution sensors are typically arranged on the outside of the vehicle and operatively connected to the electronic controlling means of the HVAC system. It is known to use sensors for a variety of air pollutants in automotive vehicles. If a high pollution level is detected, the controlling means may for example decide to operate the devices of the HVAC system so that no external air is transported into the interior of the vehicle. The goal of the controlling means is to operate the HVAC system so that a reasonably good and healthy air quality is maintained inside the vehicle. An example of a sensing device and air pollution detection means for automotive vehicles is for example disclosed in patent document FR 2790557.

The operation of the controlling means can typically be switched on or off by the driver of the vehicle using a dedicated physical switch located on the vehicle's dashboard or in a control-bearing surface, such as the center console. The driver is often completely unaware of the activity of the controlling means, and its positive effect on the air quality is often taken for granted. In many occurrences, the driver is therefore not incited to, or is not aware of the necessity to actively switch on the electronic controlling means of the HVAC system. This in turn leads to the deterioration of the air quality inside the vehicle, especially while driving in an environment exhibiting high levels of air pollution.

It is an objective of the present invention to provide a method and device according to claims 1 and 2 that alleviate at least some of the problems present in the state of the art.

It is an object of the invention to provide a method for operating a Heating, Ventilation and Air-Conditioning, HVAC system of an automotive vehicle as disclosed in the document US2007243808 and described in the preamble of claim 1.

The indication of the identified operation means may comprise the display of a text and/or graphical representation, such as an image or icon, which clearly indicates the identified operation mode of the HVAC system, selected and applied by the controlling means.

The step of determining if the electronic controlling means are operative comprises providing an actuating signal at said computing means. The actuating signal is received from actuating means of the electronic controlling means. Preferably, the actuating means may comprise physical switch, which is preferably located in the center console of the vehicle. The physical switch may be arranged in other locations, which are in easy reach of the vehicle's driver while he is driving. Alternatively, the actuating means may comprise a predetermined area of a touch-screen device, so that the area of the touch-screen device can be touched by a user in order to switch the electronic controlling means on or off.

The electronic controlling means, the display means and the actuating means are operatively connected using data communication means. The data communication means, according to the invention, comprise a controller area network bus, CAN, of the vehicle. The computing means may be programmable computing means.

It is a further object of the invention to provide a Heating, Ventilation and Air-Conditioning, HVAC, system for an automotive vehicle according to claim 2.

The display means may preferably comprise a predetermined area of a multi-functional display unit of the vehicle.

Advantageously, the display means may comprise a predetermined area of a touch-sensitive display unit of the vehicle, and the actuating means may further be operable using said touch-sensitive display unit. Preferably, the touch-sensitive display unit is arranged in the center console of a vehicle.

It is further object of the invention to provide an automotive vehicle comprising a Heating, Ventilation and Air-Conditioning, HVAC, system. The vehicle is remarkable in that the HVAC system is in accordance with the invention.

By using the method and device provided by the invention, the operation and use of an HVAC system which comprises electronic controlling means for improving the quality of air inside an automotive vehicle is facilitated. The indications that are enabled by using the invention raise the awareness of the presence of the electronic controlling means and their impact on the quality of the air inside the vehicle. Thereby, their use and activation is facilitated, which has a positive impact on the air quality inside the vehicle. As the air quality inside the vehicle is improved, the comfort of the passengers and of the driver is increases, therefore leading to increased security in traffic.

Other features and advantages of the present invention will be more fully understood based on the following description of exemplary embodiments and figures, of which:
- figure 1 is a flow chart illustrating the main steps of a preferred embodiment of the method according to the invention;
- figure 2 is a schematic illustration of an embodiment of the device which is not part of the invention;
- figure 3 is a schematic illustration of a preferred embodiment of the device according to the invention.

Unless stated otherwise, features disclosed for a specific embodiment may be combined with those features disclosed for other embodiments according to the invention. Like reference numerals will be used to refer to like concepts across different embodiments. For example, reference numerals 100 and 200 are used to describe a device according to the invention in two different embodiments.

The method according to the invention is used for operating a HVAC, system of an automotive vehicle. The HVAC system comprises electronic controlling means, which are configured for being selectively switched on or off by a user. It is a goal of the electronic controlling means to select and apply one of a plurality of predetermined operating modes of the HVAC's devices, in order to maintain or improve the quality of the air inside the vehicle. Such air quality control systems are known in the art and will not be described in further detail in the context of the present invention. The operation mode is selected based on at least one parameter representing a measure of the air quality outside of the vehicle, which is provided using known air quality sensing means, or pollution detection means.

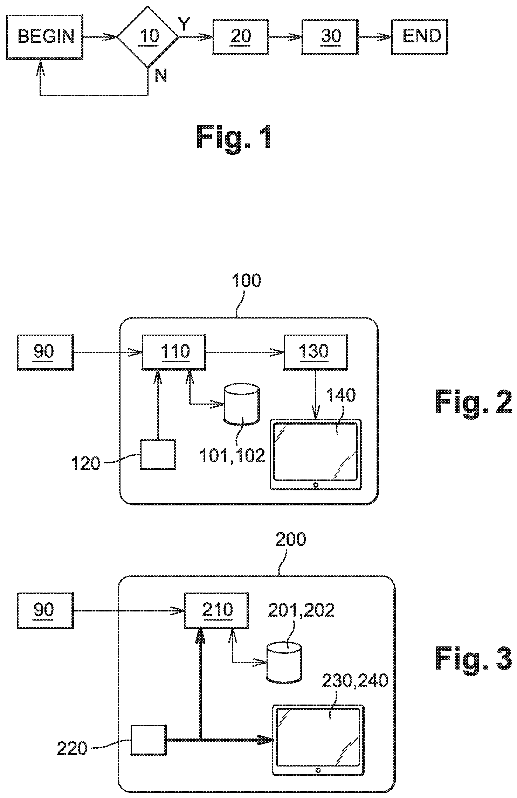

Figure 1 shows the main steps of the method according to the present invention in a preferred embodiment. In step 10, computing means of the HVAC system determine if the electronic controlling means are operative, i.e. switched on. If it is determined that the HVAC system is not switched on, the method begins again. The method exits this standby loop into step 20 as soon as it determines that the controlling means are switched on. In step 20, the current operation mode of the HVAC system is determined using said computing means. In step 30, the identified operation mode is indicated on display means operatively connected to the HVAC system.

Figure 2 illustrates an embodiment of a device 100 which is not part of the invention. All devices described herein are powered by a non-illustrated current source of the vehicle, such as for example the car battery. The device 100 comprises computing means 130 capable of implementing method steps 10 to 30. The computing means are for example provided by way of a dedicated processor unit, or as part of the pre-existing computing resources of the vehicle, such as a central computing unit. The computing means may further be programmable computing means, which can be programmed using computer readable code means to implement steps 10 to 30 of the invention.

The device further comprises electronic controlling means 110 capable of controlling and managing the operation of the devices which make up the HVAC system 100. These known devices, such as air pumps, heaters, filters and pumps are not illustrated for the sake of clarity. The controlling means are operatively connected to the devices of the HVAC system 100 via data communication means. Furthermore the controlling means 110 are operatively connected to the computing means using data communication means, which allow the controlling means to send signals and/or data packets to the computing means and vice-versa. The controlling means 110 are fed with at least one parameter originating from at least one air pollution sensing means 90, which is as such known in the art. Depending on the value of the provided parameters, the controlling means selects and applies one of a plurality of predetermined operation modes of the entire HVAC system. The operation modes 101, 102 are preferably stored in a memory element to which the controlling means have read access. Even more preferably, the operation modes are stored in a data structure such as a database.

The device comprises activation means 120, such as a dedicated switch, which allow a user to manually switch the controlling means on or off. The switch is for example an element of the vehicle's center console. The switch is preferably connected to the controlling means by data communication means, which allow the transmission of signals and/or data packets to the controller.

Further, the device comprises display means 140, such as an LCD screen or a LED powered screen, to which the computing means have write access. The computing means are therefore capable of defining the visual content of the display means.

In order to implement step 10 of the method according to the invention, the computing means are for example configured to probe the controlling means 110 periodically using the data communication means. If no reply is received from the controlling means, the computing means determine that the controlling means are not active. If a reply is received, the computing means determine that the controlling means are active. The reply may further comprise the current HVAC operation mode 101, 102 as currently selected and applied by the controlling means 110. Alternatively, the computing means may request the operation mode to be provided separately by the controlling means. This implements step 20 of the method according to the invention. In order to implement step 30, the computing means write an indication which describes the selected HVAC operation mode onto the display means. The contextual indication may for example include a graphical representation such as an icon or an animated icon, and/or an explanatory text, which describes the operation mode selected and applied by the controlling means, such as "Air Quality System activated", "Dry Clean Air", or "Air inlet forced closed". The indications may preferably be stored in a non-illustrated memory element to which the computing means have read access.

A preferred embodiment of the device 200 according to the invention is illustrated in Figure 3. The data communication means which interconnect the activation means 220, the controlling means 210, the computing means 230 and the display means 240 are provided by a control area bus, CAN, of the vehicle. The bus is shown using a thick line. The CAN bus is a known vehicle bus standard designed to allow microcontrollers and devices to communicate with each other within a vehicle without a host computer. CAN bus is a message-based protocol, designed specifically for automotive applications. As shown, the computing means 230 may be collocated with the display unit 240. In this embodiment, instead of actively probing the controlling means in order to determine their operation status, the computing means determine whether the controlling means 210 are operative based on the reception of a corresponding message on the CAN bus. For example, if a user activates the switch 220 to trigger the controlling means, an activation message is transmitted from the switch on the CAN bus. In known configurations, only the controlling means read the message and switch themselves on. According to the invention, the same message is read by the computing means 230, thereby implementing step 10 of the method according to the invention. The operation mode of the HVAC system is equally obtained on the CAN bus in order to implement step 20 of the method according to the invention.

The display means 240 may be part of a multi-functional display or other known human-machine interfaces of the vehicle. In case of a multi-functional display, a dedicated area of the display surface is used for indicating the operation mode of the HVAC system and controlling means. The display means may further be touch-sensitive display means. In that case, the activation means 220 may also be provided as a portion of the touch-sensitive display surface, so that a user may switch on the controlling means 210 by touching said portion with their finger.

## Claims

1. A method for operating a Heating, Ventilation and Air-Conditioning, HVAC, system (200) of an automotive vehicle, wherein the HVAC system comprises electronic controlling means (210), which are configured for being selectively switched on or off by a user and which are capable of setting and applying one of a plurality of predetermined operating modes (201;202) of the HVAC system based on at least one parameter representing a measure of the air quality outside of the vehicle, said parameter being provided by air quality sensing means, said method comprising the steps of:
- determining, using computing means (230) of said HVAC system (200), if the electronic controlling means (210) are operative (10);
- if said electronic controlling means are operative, determining the current operation mode of the HVAC system using said computing means (20);
- indicating said identified operation mode on display means (240) operatively connected to the HVAC system (30) ; said computing means (230) writing an indication on display means which describes the selected HVAC operation mode corresponding to air quality status
wherein the step (10) of determining if the controlling means (210) are operative comprises providing an actuating signal at said computing means (230), the signal being received from actuating means (220) of the electronic controlling means (210), wherein the electronic controlling means (210), the display means (240) and the actuating means (220) are operatively connected using data communication means, and **characterised in that**, the data communication means comprise a controller area network bus, CAN, of the vehicle.

2. A Heating, Ventilation and Air-Conditioning, HVAC system (200) for an automotive vehicle, wherein the HVAC system comprises electronic controlling means (210), which are configured for being selectively switched on or off by a user using actuating means (220), and which are capable of setting and applying one of a plurality of predetermined operating modes (201;202) of the HVAC system based on at least one parameter representing a measure of the air quality of the vehicle, said parameter being provided by air quality sensing means;
said HVAC system further comprises display means (240) and computing means (230) configured for
- determining if the electronic controlling means (210) are operative (10);
- if said electronic controlling means are operative, determining the current operation mode of the HVAC system using said computing means (20);
- indicating said identified operation mode on the display means (240) (30).; said computing means (230) writing an indication on display means which describes the selected HVAC operation mode corresponding to air quality status, wherein the HVAC system, the electronic controlling means (210), the display means (240) and the actuating means (220) are operatively connected using data communication means, and **characterised in that**, the data communication means comprise a controller area network bus, CAN, of the vehicle.

3. A Heating, Ventilation and Air-Conditioning, HVAC system (200) according to claim 2, wherein said display means (240) comprise a predetermined area of a multi-functional display unit of the vehicle.

4. A Heating, Ventilation and Air-Conditioning, HVAC system (200) according to claim 2, wherein said display means (240) comprise a predetermined area of a touch sensitive display unit of the vehicle, and wherein said actuating means are operable using said touch sensitive display unit.

5. An automotive vehicle comprising a Heating, Ventilation and Air-Conditioning, HVAC system, **characterized in that** said HVAC system is in accordance with any of claims 2 to 4.

## Patentansprüche

1. Verfahren zum Betreiben eines Heizungs-, Belüftungs- und Klimatisierungs-(HVAC)-Systems (200) eines Kraftfahrzeugs, wobei das HVAC-System elektronische Steuermittel (210) umfasst, die konfiguriert sind, um selektiv von einem Benutzer ein- oder ausgeschaltet zu werden, und die fähig sind, einen einer Mehrzahl vorbestimmter Betriebsmodi (201; 202) des HVAC-Systems basierend auf mindestens einem Parameter, der eine Messung der Luftqualität außerhalb des Fahrzeugs darstellt, einzustellen und anzuwenden, wobei der Parameter von Luftqualitätserfassungsmitteln bereitgestellt wird, wobei das Verfahren folgende Schritte umfasst:
- Bestimmen unter Verwenden von Rechenmitteln (230) des HVAC-Systems (200), ob die elektronischen Steuermittel (210) betriebsfähig sind (10);
- falls die elektronischen Steuermittel betriebsfähig sind, Bestimmen des aktuellen Betriebsmodus des HVAC-Systems unter Verwenden der Rechenmittel (20);
- Angeben des identifizierten Betriebsmodus auf Anzeigemitteln (240), die betrieblich mit dem HVAC-System (30) verbunden sind;
wobei die Rechenmittel (230) eine Angabe auf Anzeigemitteln schreiben, die den ausgewählten HVAC-Betriebsmodus, der einem Luftqualitätszustands entspricht, angeben,
wobei der Schritt (10) des Bestimmens, ob die Steuermittel (210) betriebsfähig sind, das Bereitstellen eines Betätigungssignals an den Rechenmitteln (230) umfasst,
wobei das Signal von Betätigungsmitteln (220) der elektronischen Steuermittel (210) empfangen wird, wobei die elektronischen Steuermittel (210), die Anzeigemittel (240) und die Betätigungsmittel (220) betrieblich unter Verwenden von Datenkommunikationsmitteln verbunden sind, und **dadurch gekennzeichnet, dass** die Datenkommunikationsmittel einen Controller-Area-Network-Bus, CAN, des Fahrzeugs umfassen.

2. Heizungs-, Belüftungs- und Klimatisierungs-(HVAC)-System (200) für ein Kraftfahrzeug, wobei das HVAC-System elektronische Steuermittel (210) umfasst, die konfiguriert sind, um von einem Benutzer unter Verwenden von Betätigungsmitteln (220) selektiv ein- oder ausgeschaltet zu werden, und die fähig sind, eine Mehrzahl vorbestimmter Betriebsmodi (201; 202) des HVAC-Systems basierend auf mindestens einem Parameter, der eine Messung der Luftqualität des Fahrzeugs darstellt, einzustellen und anzuwenden, wobei der Parameter von Luftqualitätserfassungsmitteln bereitgestellt wird;
wobei das HVAC-System weiter Anzeigemittel (240) und Rechenmittel (230) umfasst, die konfiguriert sind, um
- zu bestimmen, ob die elektronischen Steuermittel (210) betriebsfähig sind (10);
- falls die elektronischen Steuermittel betriebsfähig sind, den aktuellen Betriebsmodus des HVAC-Systems unter Verwenden der Rechenmittel (20) zu bestimmen;
- den identifizierten Betriebsmodus auf den Anzeigemitteln (240) anzugeben (30);
wobei die Rechenmittel (230) eine Angabe auf Anzeigemitteln schreiben, die den ausgewählten HVAC-Betriebsmodus beschreibt, der dem Luftqualitätsstatus entspricht, wobei das HVAC-System, die elektronischen Steuermittel (210), die Anzeigemittel (240) und die Betätigungsmittel (220) betrieblich unter Verwenden von Datenkommunikationsmitteln verbunden sind, und **dadurch gekennzeichnet, dass** die Datenkommunikationsmittel einen Controller-Area-Network-Bus, CAN, des Fahrzeugs umfassen.

3. Heizungs-, Belüftungs- und Klimatisierungs-(HVAC)-System (200) nach Anspruch 2, wobei die Anzeigemittel (240) eine vorbestimmte Fläche einer multifunktionalen Anzeigeeinheit des Fahrzeugs umfassen.

4. Heizungs-, Belüftungs- und Klimatisierungs-(HVAC)-System (200) nach Anspruch 2, wobei die Anzeigemittel (240) eine vorbestimmte Fläche einer berührungsempfindlichen Anzeigeeinheit des Fahrzeugs umfassen, und wobei die Betätigungsmittel unter Verwenden der berührungsempfindlichen Anzeigeeinheit betreibbar sind.

5. Kraftfahrzeug, das ein Heizungs-, Belüftungs- und Klimatisierungs-(HVAC)-System umfasst, **dadurch gekennzeichnet, dass** das HVAC-System mit einem der Ansprüche 2 bis 4 übereinstimmt.

## Revendications

1. Procédé pour faire fonctionner un système de chauffage, ventilation, et climatisation, HVAC, (200) d'un véhicule automobile, dans lequel le système HVAC comprend des moyens de commande électronique (210) configurés pour être sélectivement mis en marche et à l'arrêt par un utilisateur et capables de définir et appliquer l'un d'une pluralité de modes de fonctionnement prédéterminés (201 ; 202) du système HVAC sur la base d'au moins un paramètre représentant une mesure de la qualité de l'air à l'extérieur du véhicule, ledit paramètre étant fourni par des moyens de détection de la qualité de l'air,
ledit procédé comprenant les étapes suivantes :
- la détermination, en utilisant des moyens de calcul (230) dudit système HVAC (200), si les moyens de commande électronique (210) sont opératifs (10) ;
- si lesdits moyens de commande électronique sont opératifs, la détermination du mode de fonctionnement actuel du système HVAC en utilisant lesdits moyens de calcul (20) ;
- l'indication dudit mode de fonctionnement identifié sur des moyens d'affichage (240) connectés de manière fonctionnelle au système HVAC (30) ; lesdits moyens de calcul (230) écrivant une indication sur des moyens d'affichage, laquelle décrit le mode de fonctionnement HVAC sélectionné correspondant à l'état de la qualité de l'air,
dans lequel l'étape (10) de détermination si les moyens de commande (210) sont opératifs comprend la fourniture d'un signal d'actionnement au niveau desdits moyens de calcul (230), le signal étant reçu de la part des moyens d'actionnement (220) des moyens de commande électronique (210),
dans lequel les moyens de commande électronique (210), les moyens d'affichage (240) et les moyens d'actionnement (220) sont connectés de manière fonctionnelle en utilisant des moyens de communication de données, et
**caractérisé en ce que** les moyens de communication de données comprennent un bus de réseau de zone de contrôleur, CAN, du véhicule.

2. Système de chauffage, ventilation et climatisation, HVAC, (200) pour un véhicule automobile, dans lequel le système HVAC comprend des moyens de commande électronique (210) configurés pour être sélectivement mis en marche et à l'arrêt par un utilisateur en utilisant des moyens d'actionnement (220) et capables de définir et appliquer l'un d'une pluralité de modes de fonctionnement prédéterminés (201 ; 202) du système HVAC sur la base d'au moins un paramètre représentant une mesure de la qualité de l'air à l'extérieur du véhicule, ledit paramètre étant fourni par des moyens de détection de la qualité de l'air ;
ledit système HVAC comprend en outre des moyens d'affichage (240) et des moyens de calcul (230) configurés pour
- déterminer si les moyens de commande électronique (210) sont opératifs (10) ;
- si lesdits moyens de commande électronique sont opératifs, la détermination du mode de fonctionnement actuel du système HVAC en utilisant lesdits moyens de calcul (20) ;
- indiquer ledit mode de fonctionnement identifié sur les moyens d'affichage (240) (30) ;
- lesdits moyens de calcul (230) écrivant une indication sur des moyens d'affichage, laquelle décrit le mode de fonctionnement HVAC sélectionné correspondant à l'état de la qualité de l'air,
dans lequel le système HVAC, les moyens de commande électronique (210), les moyens d'affichage (240) et les moyens d'actionnement (220) sont connectés de manière fonctionnelle en utilisant des moyens de communication de données, et
**caractérisé en ce que** les moyens de communication de données comprennent un bus de réseau de zone de contrôleur, CAN, du véhicule.

3. Système de chauffage, ventilation et climatisation, HVAC, (200) selon la revendication 2, dans lequel lesdits moyens d'affichage (240) comprennent une zone prédéterminée d'une unité d'affichage multifonctionnelle du véhicule.

4. Système de chauffage, ventilation et climatisation, HVAC, (200) selon la revendication 2, dans lequel lesdits moyens d'affichage (240) comprennent une zone prédéterminée d'une unité d'affichage tactile du véhicule, et dans lequel on peut faire fonctionner lesdits moyens d'actionnement en utilisant ladite unité d'affichage tactile.

5. Véhicule automobile comprenant un système de chauffage, ventilation et climatisation, HVAC, **caractérisé en ce que** ledit système HVAC est selon l'une quelconque des revendications 2 à 4.
